Europäisches Patentamt

European Patent Office

Office européen des brevets

(19)

(11) Veröffentlichungsnummer: **0 312 750 B1**

(12) # EUROPÄISCHE PATENTSCHRIFT

(45) Veröffentlichungstag der Patentschrift:
04.09.91 Patentblatt 91/36

(51) Int. Cl.⁵: **E03D 3/04,** // F16K21/10

(21) Anmeldenummer: **88114562.7**

(22) Anmeldetag: **07.09.88**

---

(54) **Druckspüler für Wasserklosetts.**

---

(30) Priorität: **17.10.87 DE 8713967 U**

(43) Veröffentlichungstag der Anmeldung:
**26.04.89 Patentblatt 89/17**

(45) Bekanntmachung des Hinweises auf die
Patenterteilung:
**04.09.91 Patentblatt 91/36**

(84) Benannte Vertragsstaaten:
**AT BE CH DE ES FR GB GR IT LI LU NL SE**

(56) Entgegenhaltungen:
**DE-A- 3 005 280**
**DE-A- 3 317 877**
**DE-A- 3 427 336**

(56) Entgegenhaltungen:
**DE-C- 2 147 360**
**DE-U- 8 018 314**
**DE-U- 8 627 410**
**US-A- 3 674 237**

(73) Patentinhaber: **Metallwerke Gebr.**
**Seppelfricke GmbH & Co.**
**Haldenstrasse 27**
**W-4650 Gelsenkirchen (DE)**

(72) Erfinder: **Kleineberg, Manfred**
**Am Hebewerk 77**
**W-4355 Waltrop (DE)**

(74) Vertreter: **Louis, Walter, Dipl.-Ing. et al**
**Patentanwälte Dipl.-Ing. Walter Louis**
**Dipl.-Ing. Günter Louis Stubertal 3**
**W-4300 Essen 1 (DE)**

---

## Beschreibung

Die Erfindung bezieht sich auf einen Druckspüler für Wasserklosetts gemäß dem Oberbegriff des Anspruchs 1.

Bei diesem in dem DE-GM 8627410 beschriebenen Zwei-Mengen-Druckspüler kann, indem die Bedienungstaste des Druckspülers nur leicht gedrückt wird, nur der Verschlußstößel des Entlastungsventils von seinem Verschlußsitz nach unten abgedrückt werden, so daß der Verschlußstößel um einen langen Weg bis auf den Mitnehmeranschlag des Spülventilkolbens absinkt und von dem in die Öffnungsstellung hochsteigenden Spülventilkolben wieder gegen den Verschlußsitz des Entlastungsventils anzuheben ist. Dadurch ergibt sich die in der Praxis geforderte große Spülmenge von etwa 6 Litern. Wird hingegen die Bedienungstaste fester und tiefer gedrückt, wird nicht nur der Verschlußstößel von seinem Verschlußsitz nach unten abgedrückt, sondern wird auch noch der den Verschlußsitz enthaltende, abgedichtet und verschiebbar im Druckspüler gelagerte Kolbenkörper um einen durch eine Hubbegrenzung begrenzten Teil des Öffnungsweges des absinkenden Verschlußstößels heruntergeschoben, so daß der Spülventilkolben weniger Weg und weniger Zeit braucht, um den Verschlußstößel wieder gegen den heruntergeschobenen Verschlußsitz des Entlastungsventils anzuheben. Hierdurch ergibt sich eine in der Praxis zulässige kleine Spülmenge von etwa 3,5 Litern. Die Bedienung dieses Druckspülers hat für die Praxis jedoch noch Nachteile. Da die Bedienungstaste immer, auch bei gewünschter großer Spülmenge, bis gegen einen der kleinen Spülmenge zugeordneten Anschlag herunterdrückbar ist, kann ein unbeabsichtigtes kräftiges, zu tiefes Herunterdrükken der Bedienungstaste dazu führen, daß statt der benötigten und gewünschten großen Spülmenge nur eine reduzierte oder die kleine Spülmenge vom Druckspüler abgegeben wird. Gefühlsmäßig ist beim Betätigen des Druckspülers schwierig diejenige Zwischenstellung der Bedienungstaste zu erkennen, ab der eine Betätigung des Verschlußstößels für die große Spülmenge in eine Betätigung des Kolbenkörpers für eine verringerte Spülmenge übergeht. Dies wird noch dadurch erschwert, daß beim Öffnen des Entlastungsventils mit der direkt gegen den Verschlußstößel in dessen Verschiebeachse drückenden Bedienungstaste der in der entgegengesetzten Richtung auf den Verschlußstößel einwirkende Wasserdruck überwunden werden muß, der bei vorkommenden hohen Leitungsdrücken außerdem auf das Entlastungsventil eine solche Gegenkraft ausüben kann, daß ein Drücken der Bedienungstaste des Druckspülers beschwerlich wird.

Die Erfindung hat zur Aufgabe, den Druckspüler der eingangs genannten Art weiterzuentwickeln, um die Bedienung für die Abgabe der größten und der kleinsten Spülmenge zu vereinfachen und zu erleichtern.

Diese Aufgabe wird gemäß der Erfindung durch die im kennzeichnenden Teil des Anspruchs 1 enthaltenen Merkmale gelöst. Hierdurch ist der großen und der kleinen Spülmenge je eine eigene Drucktaste mit begrenztem Betätigungsweg zugeordnet, so daß für eine zuverlässige Bedienung des Druckspülers zur Abgabe der großen oder der kleinen Spülmenge nur die jeweilige Drucktaste mit einem einfachen manuellen Betätigungsimpuls ganz bis zu ihrem Anschlag heruntergedrückt zu werden braucht. Die Zuordnung der beiden Drucktasten zu den beiden Spülmengen läßt sich optisch und begrifflich einfach kennzeichnen, beispielsweise mit einem Plus-Symbol für die große und einem Minus-Symbol für die kleine Spülmenge oder indem die der großen Spülmenge zugeordnete Drucktaste mit einer grösseren Länge aus dem Druckspülergehäuse herausragt als die andere Drucktaste. Beide Drucktasten wirken auf einen langen Hebelarm der Wippe ein, die mit einem kurzen Hebelarm an dem Betätigungsstößel angreift, so daß durch das Hebelübersetzungsverhältnis der Wippe die an den Drucktasten zum Öffnen des Entlastungsventils aufzubringende Kraft reduziert wird und die Bedienung des Druckspülers auch bei höheren vorkommenden Leitungsdrücken bequem ist.

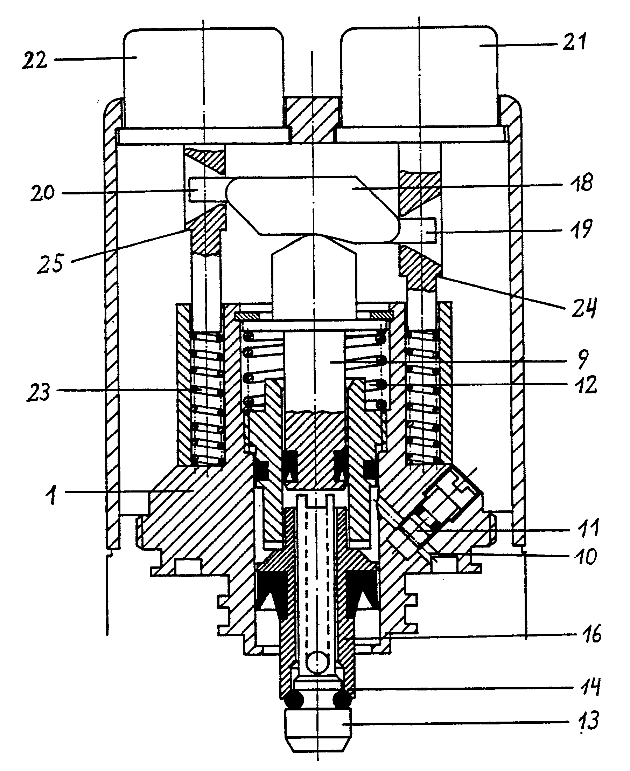

In der Zeichnung ist ein Ausführungsbeispiel der erfindungsgemäßen Druckspülerausbildung in einem vertikalen Mittelschnitt dargestellt.

Der Druckspüler enthält unter einem Gehäusedeckel 1 die übliche Druckausgleichskammer, die durch eine Zulaufdüse mit dem Wassereintritt des Druckspülers in Verbindung steht und in der sich ein Wasserdruck aufbaut, der den auf den Spülventilkolben bei dessen Schließstellung einwirkenden Leitungsdruck kompensiert. Durch Öffnen des aus einem Verschlußstößel 13 und einem Verschlußsitz 14 bestehenden Entlastungsventils wird das Wasser aus der Druckausgleichskammer durch einen Ablaufkanal 10 mit einer verstellbaren Entlastungsdüse 11 zum Wasseraustritt des Druckspülers abgelassen, so daß der Leitungsdruck den Spülventilkolben in die Öffnungsstellung anheben kann. Nach dem manuellen Abdrücken des Verschlußstößels 13 vom Verschlußsitz 14 sinkt der Verschlußstößel 13 selbsttätig bis auf einen Mitnehmeranschlag des sich anhebenden und öffnenden Spülventilkolbens ab, der den Verschlußstößel 13 wieder gegen den Verschlußsitz 14 anhebt, um den im Schließsinn auf den Spülventilkolben einwirkenden Druckaufbau in der Ausgleichskammer einzuleiten. Weg und Zeit, die der Spülventilkolben hierfür braucht, bestimmen die vom Druckspüler abgegebene große Spülmenge. Wird nach dem Abstoßen des Verschlußstößels 13 vom Verschlußsitz 14 außerdem noch manuell ein den Verschlußsitz 14 enthaltender, abdichtend im Druckspüler verschiebbarer Kolbenkörper 16 um einen vorbestimmten Teil des Öffnungsweges des Verschlußstößels 13 nach unten nachgeschoben, verkürzen sich Weg und Zeit, die der Spülventilkolben zum Anheben des abgesunkenen Verschlußstößels 13 gegen den Verschlußsitz 14 braucht. Hierdurch wird die vom Druckspüler abgegebene kleine Spülmenge bestimmt. Durch den Druckaufbau in der Druckausgleichskammer wird auch der Kolbenkörper 16 mit dem in der Schließstellung befindlichen Verschlußstößel 13 wieder in die Ausgangsstellung hochgeschoben.

Zum Abdrücken des Verschlußstößels 13 vom Verschlußsitz 14 und zum Herunterschieben des Kolbenkörpers 16 ist in dem Kopfstück 1 des Druckspülergehäuses ein Betätigungsstößel 9 verschiebbar angeordnet, dessen Gewicht zweckmäßigerweise durch eine Rückstellfeder 12 ausgeglichen wird. An dem Betätigungsstößel 9 greift eine waagbalkenartig auf das Kopfende des Stößels aufgesetzte Betätigungswippe 18 an. Die Wippenenden 19 und 20 sind mit aus dem Druckspülergehäuse herausgeführten Drucktasten 21 bzw. 22 gekoppelt, die durch Federn 23 gegen einen Gehäuseanschlag hochgedrückt werden. Die Drucktasten 21 und 22 bilden bei dem dargestellten Ausführungsbeispiel direkt den Anschlag, der die Bewegbarkeit der Wippenenden nach oben begrenzt und um den sich an dem nicht betätigten Wippenende die Wippe beim Betätigen des anderen Wippenendes verschwenkt. Von diesem Anschlag aus sind die Wippenenden 19 und 20 um einen vorbestimmten begrenzten Weg abwärts verschwenkbar. Hierzu ist bei dem dargestellten Ausführungsbeispiel die der großen Spülmenge zugeordnete Drucktaste 21 um einen kleineren Hubweg herunterdrückbar, bis eine Schulter 24 der Drucktaste gegen das Gehäusestück 1 anschlägt, und hat die der kleinen Spülmenge zugeordnete Drucktaste 22 einen durch eine höher gelegene Anschlagschulter 25 begrenzten größeren Hubweg. Beim Abwärtsschwenken des Wippenendes 19 um den durch die Drucktastenschulter 24 begrenzten Weg wird unter Berücksichtigung der Hebelverhältnisse der Wippe 18 der Betätigungsstößel 9 um einen ersten Hubweg nach unten verschoben, bei dem nur der Verschlußstößel 13 vom Verschlußsitz 14 abgestoßen wird und noch nicht der Betätigungsstößel 9 gegen den Kolbenkörper 16 anstößt. Beim Abwärtsschwenken des Wippenendes 20 um den durch die Drucktastenschulter 25 begrenzten Weg wird unter Berücksichtigung der Hebelverhältnisse der Wippe 18 der Betätigungsstößel 9 zunächst um den den Verschlußstößel 13 vom Verschlußsitz 14 abstoßenden ersten Hubweg und dann noch um einen anschließenden zweiten Hubweg abwärts verschoben, bei dem der Betätigungsstößel 9 auch noch den Kolbenkörper 16 berührt und um einen vorbestimmten Teil des Öffnungsweges des Verschlußstößels 13 herunterschiebt.

Die Anschläge, die die Bewegbarkeit der Wippenenden 19 und 20 nach oben begrenzen und von denen aus die Wippenenden und die vorstehend geschilderten,begrenzten Wege abwärts verschwenkbar sind, können auch direkt von Gehäuseanschlägen gebildet sein. Es kann dann beispielsweise das Wippenende 19 in eine vertikal längliche Öffnung der Drucktaste 21 eingreifen, so daß die der größeren Spülmenge zugeordnete Drucktaste 21, damit sie nicht nur um einen kleinen Hubweg sondern wenigstens auch um den gleichen Hubweg wie die der kleineren Spülmenge zugeordnete Drucktaste 22 herunterdrückbar ist, bei der Betätigung zunächst einen Leerhub und dann erst den zum Verschieben des Betätigungsstößels 9 notwendigen und wirksamen Hub ausführt.

## Patentansprüche

1. Druckspüler für Wasserklosetts mit einem durch Federkraft auf einen Absperrsitz im Druckspülergehäuse gedrückten und durch den Wasserdruck am Wassereintritt des Druckspülers in die Öffnungsstellung anhebbaren Spülventilkolben, mit einer den Spülventilkolben in der Schließrichtung beaufschlagenden Druckausgleichskammer, die durch eine Zulaufdüse mit dem Wassereintritt verbunden ist und aus der das Wasser durch ein Enlastungsventil zum Wasseraustritt des Druckspülers ablassbar ist, wobei ein Verschlußstößel (13) des Entlastungsventils entgegen der Öffnungsbewegung des Spülventilkolbens manuell von einem Verschlußsitz (14) des Entlastungsventils abdrückbar und danach selbsttätig bis auf einen Mitnehmeranschlag des Spülventilkolbens absenkbar ist und ein den Verschlußsitz (14) enthaltender Kolbenkörper (16) dem abgesunkenen Verschlußstößel (13) um einen Teil seines Öffnungsweges manuell nachschiebbar ist, wobei ein im Druckspüler verschiebbarer Betätigungsstößel (9) mit einem ersten Hubweg den Verschlußstößel (13) vom Verschlußsitz (14) abdrückt und mit einem anschließenden zweiten Hubweg den Kolbenkörper (16) verschiebt, dadurch gekennzeichnet, daß an dem Betätigungsstößel (9) eine Betätigungswippe (18) angreift, deren beide freien Wippenenden (19, 20) je mit einer aus dem Druckspülergehäuse herausgeführten Drucktaste (21, 22) gekoppelt sind, und daß jedes Wippenende an einem Anschlag anliegt, der den Schwenkpunkt der Wippe (18) beim Verschwenken des anderen Wippenendes bildet, und von dem Anschlag aus um einen begrenzten Weg verschwenkbar ist, wobei dem begrenzten Weg des einen Wippenendes (19) die Verschiebung des Betätigungsstößels (9) um den ersten Hubweg und dem begrenzten Weg des anderen Wippenendes (20) die Verschiebung des Betätigungsstößels (9) um den ersten und anschließend zweiten Hubweg zugeordnet ist.

## Claims

1. A flushing valve for lavatories having a flushing valve piston which is forced by the force of a spring on to a shutoff seat in the flushing valve casing and can be raised into the opening position by the water pressure at the water inlet of the flushing valve, and having a pressure equalizing chamber which acts on the flushing valve piston in the closure direction and is connected via a supply nozzle to the water inlet and from which the water can be discharged via a relief valve into the discharge duct of the flushing valve, whereby a closure tappet (13) of the relief valve in the opposite direction to the opening movement of the flush valve piston can be forced downwards manually from the closure seat (14) of the relief valve and thereafter can spontaneously descend as far as an entraining stop of the flushing valve piston, and whereby a piston unit (16) containing the closure seat (14) can be manually pushed after the descended closure tappet (13) along part of its opening path, and whereby an actuation tappet (9) in the flushing valve, which can be slid coaxially, pushes the closure tappet (13) away from the closure seat (14) with an initial stroke and shifts the piston unit (16) with a subsequent second stroke, characterized in that to the actuation tappet (9) an actuation tilting bar (18) is applied whose two free tilt ends (19, 20) are each linked to a pressure button (21, 22) protruding from the flushing valve casing and that each tilt end lies at an abutment, which becomes the fulcrum of the tilting bar (18) with the swinging of the other tilt end, and can to a limited degree be swung from the abutment, whereby the shifting of the actuation tappet (9) by the first stroke path is assigned to the limited path of the one tilt end (19) and the shifting of the actuation tappet (9) by the first and subsequent second stroke path is assigned to the limited path of the other tilt end (20).

## Revendications

1. Robinet de chasse d'eau pour water-closets avec un piston de soupape de vidange qui est poussé par un ressort contre un siège d'arrêt ménagé dans l'enveloppe du robinet de chasse d'eau et qui, sous l'action de la pression exercée par l'eau à l'entrée du robinet de chasse d'eau, peut être soulevé pour se placer dans la position d'ouverture, une chambre d'égalisation des pressions qui pousse le piston de la soupape de vidange dans le sens de la fermeture et qui est reliée par une buse d'amenée à l'entrée d'eau et hors de laquelle l'eau peut s'échapper à travers une soupape de trop-plein vers la sortie d'eau du robinet de chasse d'eau, un poussoir de fermeture (13) de la soupape de trop-plein pouvant être écarté manuellement dans le sens contraire du mouvement d'ouverture du piston de soupape de vidange par un siège de fermeture (14) de la soupape de trop-plein et ensuite être abaissé automatiquement jusqu'à une butée d'entraînement du piston de la soupape de vidange, et un corps de piston (16) qui contient le siège de fermeture (14) pouvant être poussé manuellement vers le poussoir de fermeture (13) rabaissé, d'une partie de sa course d'ouverture, un coulisseau de commande (9) décalable dans le robinet de chasse d'eau écartant dans la première course le poussoir de fermeture (13) du siège de fermeture (14) et déplaçant dans une seconde course suivante le corps de piston (16), caractérisé en ce que le coulisseau de commande (9) est attaqué par une bascule de commande (18) dont les deux extrémités (19, 20) sont accouplées chacune avec un bouton-poussoir (21, 22) qui sort de l'enveloppe du robinet de chasse d'eau, et que chaque extrémité de la bascule repose contre une butée qui constitue le point de pivotement de la bascule (18)lors du pivotement de l'autre extrémité de la bascule et qui est pivotable à partir de la butée sur une course limitée, le décalage du coulisseau de commande (9) sur la distance de la première course étant assignée à la course limitée de l'une des extrémités de la bascule (19) es le décalage du coulisseau de commande (9) sur la distance de la première puis de la seconde course à la course limitée de l'autre extrémité de la bascule (20).